# EUROPÄISCHE PATENTSCHRIFT

(11) **EP 0 627 980 B1**
(45) Veröffentlichungstag und Bekanntmachung des Hinweises auf die Patenterteilung: **28.01.1998**
(21) Anmeldenummer: 94903755.0
(22) Anmeldetag: 11.12.1993
(51) Int. Cl.: B29C 47/66

(54) **SCHNECKENEXTRUDER**
WORM EXTRUDER
EXTRUDEUSE A VIS

(30) Priorität: 28.12.1992 DE 4244312
(43) Veröffentlichungstag der Anmeldung: 14.12.1994
(73) Patentinhaber: Krupp Kunststofftechnik GmbH, 45143 Essen (DE)
(72) Erfinder: BAUMGARTEN, Wilfried, D-30982 Pattensen (DE)
(86) Internationale Anmeldenummer: EP9303507
(87) Internationale Veröffentlichungsnummer: WO9414597

(56) Entgegenhaltungen:
- EP-A- 0 116 773
- EP-A- 0 490 362
- WO-A-91/15348
- GB-A- 2 068 249
- US-A- 4 007 545

## Beschreibung

Die Erfindung betrifft einen Schneckenextruder, in dessen mindestens eine Schnecke aufnehmendem Zylinder Bohrungen für die Aufnahme von in den Förderbereich hineinragenden, in Radialebenen angeordneten Stiften vorgesehen sind, deren Achsen zur Zylinderwand tangential oder in der Nähe der Tangenten parallel zu diesen angeordnet sind.

Dieser Schneckenextruder ist durch die DE 40 10 540 C1 bekannt geworden.

Schneckenextruder dienen der Plastifizierung und Homogenisierung der zu extrudierenden Masse, wobei dieser Vorgang in Abhängigkeit von deren Beschaffenheit mit einer zumeist starken Erwärmung verbunden ist. Diese Erwärmung begrenzt bei vernetzbaren/vulkanisierbaren Massen die Durchsatzleistung des Extruders, da solche Vernetzung bzw. Vulkanisation im Extruder nicht auftreten darf. Unter den technischen Mitteln des Extruders, die die nötige Plastifizierung bei geringstmöglicher Masseerwärmung erzielen, sind in der Praxis bisher zwei Prinzipien als besonders wirkungsvoll erkannt worden, nämlich der sogenannte Transfermix nach DE 27 31 301 A1/DE 27 31 438 A1 und der Stiftextruder mit Radialstiften nach DE 22 35 784 B2 und weiteren.

Der Transfermix hat eine besonders hohe Ausstoßleistung, ist aber konstruktiv nur sehr schwierig auf das optimale Verhältnis von nötiger Plastifizierarbeit und Durchsatzmenge einzuplanen und zudem außerordentlich teuer in der Herstellung. Ein weiterer Nachteil des Transfermix ist, daß eine beliebige während des Betriebes erfolgende Anpassung der Plastifizierintensität an die Eigenschaften des jeweilig zu extrudierenden Materials nicht gut möglich ist, da die thermische Beeinflussung durch Kühlung oder Heizung hierfür nicht ausreicht. Dieses hat den Anwendungsbereich des Transfermix stark eingeschränkt.

Der Radialstift-Extruder nach DE 22 35 784 B2 läßt durch Stiftanordnung und -zahl sowie konstruktive Durchbildung der Stifte und Stiftverstelleinrichtungen eine relativ gute Auslegung auf die jeweils optimalen Arbeitsbedingungen zu, ist aber damit auch schwierig bedienbar und teuer. Solche Stifte besitzen keine aktive Förderwirkung und sind nicht immer selbstreinigend.

Bei diesen Radialstift-Extrudern ist als Eingriffsmöglichkeit für die Plastifizierintensität oftmals eine Stifthöhenverstellung vorgesehen, die aber recht aufwendig ist. Beispiele hierfür sind DE 22 35 784 B2, DE 35 03 911 C1, DE 40 12 612 C2 und andere. Neben der geringeren mechanischen Stabilität und dem nachteiligen Verschleiß, der unvermeidlich ist, sind die hohen Fertigungskosten zu bemängeln.

Radialstifte mit aktiver Förder- oder Mischwirkung, z. B. nach DE 36 13 612 A1 sind mechanisch noch wesentlich empfindlicher als einfache Radialstifte und haben sich daher in der Praxis nicht eingeführt.

Der größte Nachteil besteht neben dem natürlichen Verschleiß der radial in den Zylinder ragenden Stifte aber darin, daß diese schon im Neuzustand, besonders aber nach einer gewissen Abnutzung, bruchgefährdet sind. Solche Stiftbrüche sind kostspielig, da nicht nur Maschinenschäden entstehen, sondern auch Produktprobleme, die aufgrund der Produkthaftung der Produzenten untragbar geworden sind und Ausschuß oder hohe Kontrollkosten verursachen.

Auch der Extruder nach DE 40 39 942 C1, der die Vorteile des Transfermix mit dem des Radialstift-Extruders verbinden soll, hat diese Probleme und ist darüber hinaus außerordentlich teuer in der Anschaffung.

Der Tangentialstift-Extruder nach DE 40 10 540 C1 vermeidet durch die andersartige, nämlich tangentiale Anordnung der Stifte die Bruchgefahr, verbilligt die Herstellkosten im Vergleich zum Transfermix wesentlich und erlaubt eine intensive Temperierung der Stifte, was höhere Schneckendrehzahlen und damit höhere Durchsatzleistungen des Extruders ermöglicht. Eine aktive Förderwirkung besitzen diese Stifte ebenfalls nicht. Ein Nachteil wie auch bei den Radialstift-Extrudern besteht darin, daß bei Betriebsschluß eine Selbstreinigung nicht ohne weiteres erfolgt, ferner daß ein Aus- und Einbau der Förderschnecke nur bei aus dem Innenraum des Zylinders herausgezogenen Stiften möglich ist.

Die Erfindung vermeidet die Nachteile des Standes der Technik. Es ist die Aufgabe der Erfindung, einen einfach und preisgünstig herstellbaren Schneckenextruder hoher Plastifizierleistung zu schaffen, der den Vorteil wesentlich verbesserter Selbstreinigungsbedingungen und völliger Sicherheit vor Stiftbruch aufweist.

Die Erfindung besteht darin, daß die Stifte in Bereichen angeordnet sind, in denen die Schnecke mit einer ringförmigen Kernwulst und der Zylinder mit einer ringförmigen Ausnehmung der Innenwand versehen ist, daß die Stifte außerhalb eines (gedachten,) die Rücken der Stege der Schnecke umhüllenden Zylinders angeordnet sind, daß die Stifte den Radialebenenbereich, in dem sich die Ringwulst und die ringförmige Ausnehmung befinden, schräg durchsetzen.

Das Merkmal, die Stifte schräganzuordnen ist an sich aus der in der Beschreibung als gattungsbildender Stand der Technik genannten IT-A-1 184 555 bekannt (vgl. Spalte 2, Zeilen 42-46 der DE-C-4 010 540)

Dieser Schneckenextruder ist einfach herstellbar, denn die Herstellung von ringförmigen Ausnehmungen im Zylinder und von Ringwülsten auf der Schnecke ist problemlos und kostengünstig. Die Stifte liegen in Schrägbohrungen des Zylinders des Schneckenextruders, für deren Herstellung ein wesentlich geringerer Aufwand notwendig ist als bei der Herstellung eines Transfermix-Gewindes in der Innenwandung des Zylinders, die sich nur durch komplizierte Fräsvorgänge herstellen lassen, während bei dem Schneckenextruder nach der Erfindung lediglich Bohrvorgänge zur Herstellung der die Stifte aufnehmenden Bohrungen notwendig sind. Die Schrägstellung der Stifte führt einerseits dazu, daß eine Selbstreinigung des Schneckenextruders am Ende einer Betriebsphase erfolgt, daß andererseits eine hohe Plastifizierwirkung dadurch eintritt,daß das im Extruder bearbeitete Material aus den Schneckenwindungen in die Zylinderausnehmung umgelagert wird und hier durch die Stifte einer besonders intensiven plastifizierenden Behandlung unterzogen wird, und daß sich weiterhin ein guter Fördereffekt in Axialrichtung ergibt. Dabei ist ohne Entfernung der Stifte eine Montage und Demontage der Schnecke möglich. Stiftbrüche können nicht auftreten, da die Tangentialstifte beidseitig eingespannt und festgehalten sind. Der Plastifizier- und Fördereffekt ist damit dem des Transfermix ähnlich, die Fertigung aber ist wesentlich billiger.

Baulich läßt sich dieser Schneckenextruder sehr einfach dadurch herstellen und gestalten, daß die ringförmige Ausnehmung in der Zylinderwand im Querschnitt trapezförmig ist, wobei es ebenfalls zweckmäßig ist, wenn der Wulst auf dem Schneckenkern im Querschnitt auch trapezförmig ist.

Die Schrägstellung der Stifte wird man zweckmäßigerweise so einstellen, daß die Stiftachsen mit dem Radialebenenbereich einen Winkel von mindestens 30° bis maximal ca. 75° einschließen.

Diese Stifte ergeben aber auch eine hervorragende Möglichkeit, die im Extruder befindliche Masse gerade in dem Bereich, in dem sie am stärksten erwärmt wird, sehr wirkungsvoll zu kühlen, wenn die Stifte hohl sind und von einem Temperiermittel durchflossen sind.

Es besteht die konstruktive Möglichkeit, daß die Stifte eine Ausnehmung aufweisen, deren Radius größer als der Radius der Schnecke ist. Hierdurch läßt sich eine besonders intensive Bearbeitung der zu extrudierenden Masse erzielen, weil die Durchgangsbereiche größeren Querschnitts geringer als bei einfachen Stiften mit kreisrundem Querschnitt sind. Diese Ausführung läßt aber auch eine Einstellung der Plastifizierwirkung zu, wenn die Stifte um ihre Achse um einen bestimmten Winkel, z. B. ca. 45° oder 60° verstellbar und feststellbar sind.

Vorteilhaft ist es, wenn der Abstand der Stifte voneinander im Radialebenenbereich in etwa dem Stiftdurchmesser entspricht oder enger ist. Durch die Schrägstellung der Stifte lassen sich erheblich mehr Stifte in einem Radialebenenbereich unterbringen als dieses nach der DE 40 10 540 C1 möglich ist. Durch Wahl des Abstandes der Stifte voneinander läßt sich die Plastifizierwirkung auf bestimmte erwünschte Werte einstellen. Es besteht sogar die Möglichkeit, bei der Verarbeitung von Massen, deren Plastifizierung wenig Schwierigkeiten bereitet, einzelne Stifte wegzulassen und an deren Stelle in deren Aufnahmebohrungen Verschlußbolzen einzusetzen, welche sich bis zur ringförmigen Ausnehmung der Innenwand des Zylinders erstrecken, aber nicht in die ringförmige Ausnehmung eintreten.

Für besonders schwer aufschließbare Massen kann es zweckmäßig sein, wenn der Kernwulst der Schnecke mit einer Verzahnung versehen ist, die auf grobe Teile der zu extrudierenden Masse Scher- und Schneidwirkungen ausüben.

Dabei kann es von Vorteil sein, wenn die Tiefe der Verzahnung in Förderrichtung abnimmt.

Bei schwierig aufzuschließenden Massen kann es auch vorteilhaft sein, wenn Stifte in mehreren hintereinander angeordneten Radialebenenbereichen angeordnet sind.

Das Wesen der Erfindung ist nachstehend anhand von in der Zeichnung schematisch dargestellten Ausführungsbeispielen näher erläutert. Es zeigen:
- Fig.1: Extruderzylinder mit schräg angeordneten Tangentialstiften im Längsschnitt bzw. Teilansicht,
- Fig.2: Extruderzylinder in der Wirkungszone quer geschnitten,
- Fig.3: Tangentialstifte mit veränderlicher Spaltweite "s"
- Fig.4: Längsschnitt mit Spalt "s"
- Fig.5: Längsschnitt mit minimalem Spalt = 1/2 Schneckenspiel
- Fig.6: Abwicklung der Stege einer eingängigen Schnecke mit Steigung "H" und der schräg angeordneten Tangentialstifte,
- Fig.7: Abwicklung der Stege einer mehrgängigen Schnecke im Stiftbereich und der schräg angeordneten Tangentialstifte

In einem Zylinder 1 mit Temperierkammern 2 befindet sich eine rotierende Extruderschnecke 3, die Stege 4 und zumindest eine Kernwulst 5 aufweist, die sich ganz oder wenigstens annähernd bis an den Schneckendurchmesser verdickt. Im Bereich dieser Kernwulst 5 hat der Zylinder 1 am Innendurchmesser eine auch zu- und ablaufseitig vorgesehene ringförmige Ausnehmung 6, welche Platz bietet für zylindrische Tangentialstifte 7, die mit Hilfe von in Bohrungen 8 fließendem Temperiermedium temperierbar sind. Die Stifte 7 werden unter einem Winkel β zur Schneckenachse so angeordnet, daß ihre Innenkanten genau mit dem zylindrischen Teil der Zylinderbohrung übereinstimmen. Durch den Winkel erscheinen die Schnitte durch die Stifte oval in dem gezeichneten Schnitt.

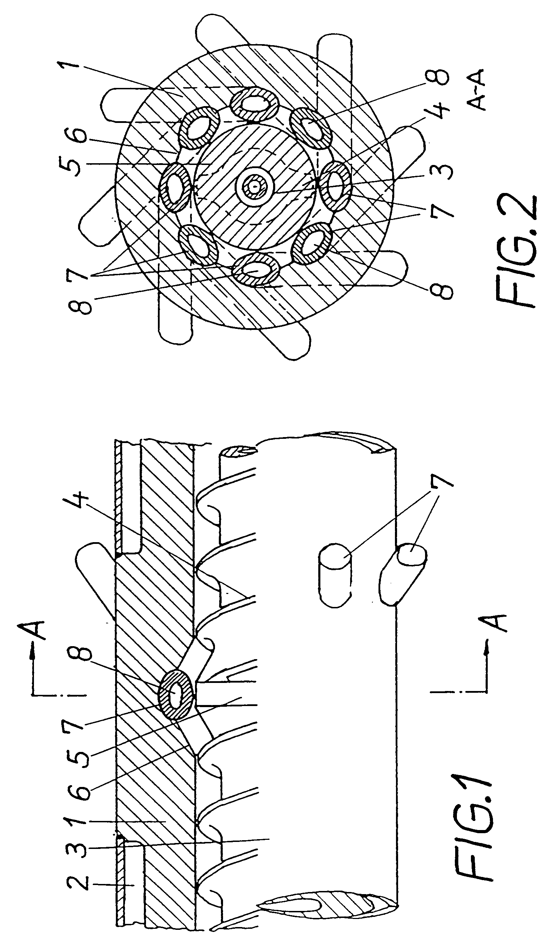

In den Figuren 1 und 2 ergeben sich punktförmige Stellen geringsten Abstandes zwischen den Stiften und dem Schneckenaußendurchmesser. Im Beispiel sind acht Stifte gezeichnet, jedoch sind auch andere Stiftzahlen je Wirkungsebene möglich. Im Bereich der Durchtritte zwischen den acht Stiften wird die zu extrudierende Masse stark verformt, was intensive Scherung bedeutet. Im Zusammenwirken zwischen dem rotierenden Kernwulst oder den Schneckengängen und den schräg angeordneten Stiften 7 ergibt sich ein Fördereffekt, der auch für Leerförderung bei Beschickungsende sorgt.

Ein wesentlicher Vorteil der Schräganordnung ist darin zu sehen, daß im Vergleich zum Tangentialstift-Extruder nach

DE 40 10 540 C1 in einer Schneckenwulst-Ebene mehr Stifte auf dem Schneckenumfang angeordnet werden können, wodurch die in diesem Bereich angeordneten Stifte mehr Plastifizierenergie (Scherarbeit) in die Extrudiermasse einbringen können. Es soll erwähnt werden, daß selbstverständlich auch mehrere solcher Schrägstift-Zonen axial nacheinander angeordnet werden können, wenn es erforderlich erscheint.

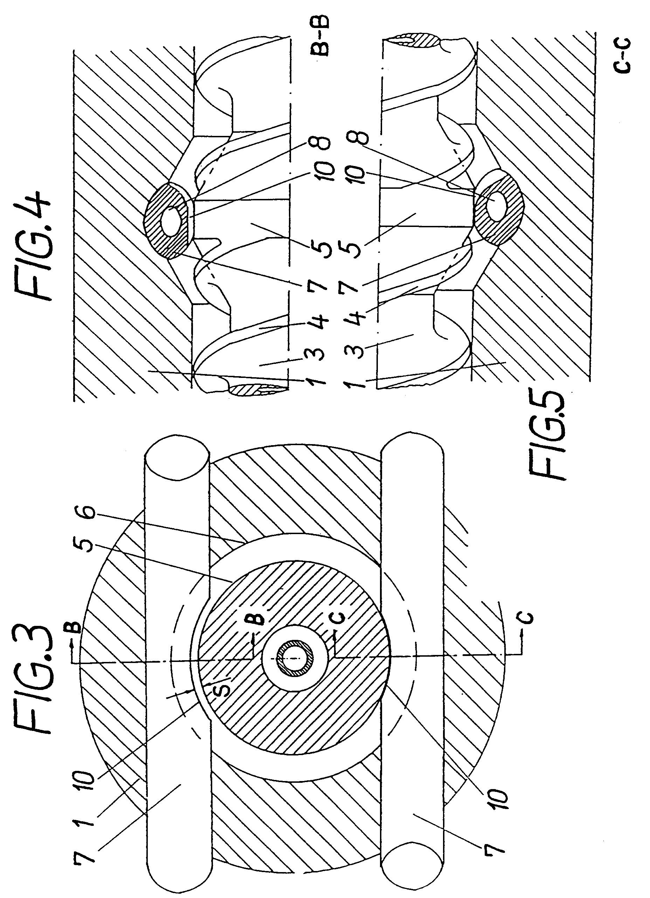

In den Figuren 3 bis 5 sind die Stifte mit ihren Achsen oder/und Innenkanten etwas näher an den Schneckenaußendurchmesser herangerückt vorgesehen, so daß die Stifte partiell für die rotierende Schnecke mit Ausnehmungen 10 versehen werden müssen. Dadurch ergibt sich je eine flächige Stelle sehr geringen Abstandes zwischen der Stiftkontur und der Schneckenwulst, was eine noch intensivere Scherung der extrudierten Masse in diesem Bereich ergibt.

In weiterer Ausbildung der schräg angeordneten Tangentialstifte ist es möglich, diese in sich axial in gewissem Bereich drehbar vorzusehen, wobei eine partielle Aussparung am Stift für eine durch die Drehung erfolgende Spaltweitenverstellung zwischen Stift und Schneckenaußendurchmesser ausgenutzt werden kann. Damit wäre eine stufenlose, während des Betriebes veränderliche Einstellung der Plastifizierintensität (Energiedissipation in das extrudierte Material) erreicht. Eine solche Stiftverstellung durch Verdrehung in der Achse um z. B. 30° bis max. ca. 90° ist baulich wesentlich billiger zu realisieren als die oben angeführten Stiftverstellungen bei Radialstiften. Sie ist darüber hinaus auch verfahrenstechnisch wirksamer. Durch Verdrehen der Stifte um einen Winkel kann die größere Abflachung zur Wirkung gebracht werden. Es entsteht dabei ein Spalt "s".

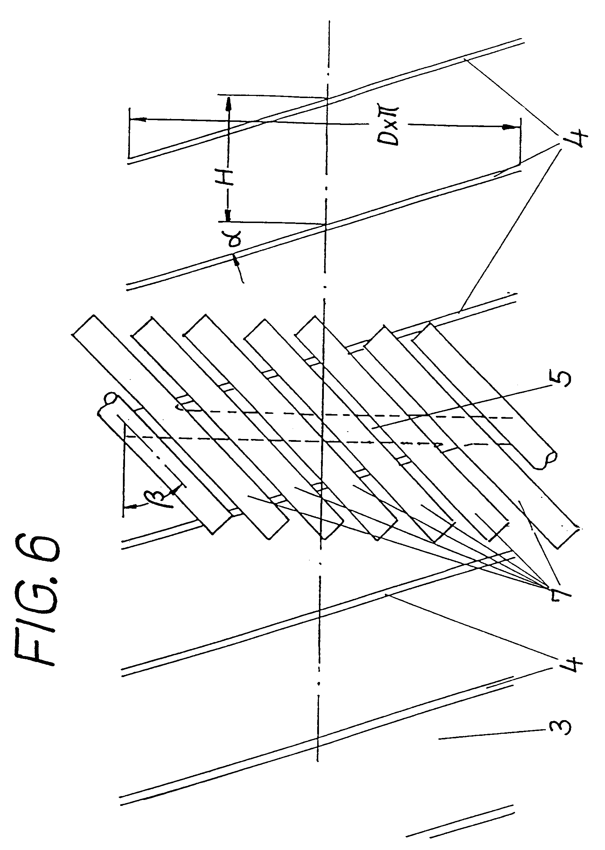

Die Konfiguration der Stifte ist in den Figuren 4 und 5 im Schnitt zu sehen. Die Gestaltung ist so vorgenommen, daß die Spaltweite "s" je nach Winkelstellung von 0 bis sₘₐₓ eingestellt werden kann. Die nötige Verstellvorrichtung zur Winkelverstellung der Stifte ist nicht dargestellt. In Abwandlung der Konstruktion wären auch auswechselbare oder axial verschiebbare Stifte realisierbar, mit denen derselbe Erfolg erzielbar wäre.

Mit Hilfe einer Sensor-Anordnung (Massedruckmessung, Temperatur- oder Viskositätsmessung o. dgl.) am Schneckenende oder direkt hinter der Stiftzone, ließe sich diese Stifteinstellung selbsttätig regeln, wodurch ein besonders homogenes, gleichbleibend gutes Extrudat erzielbar sein wird.

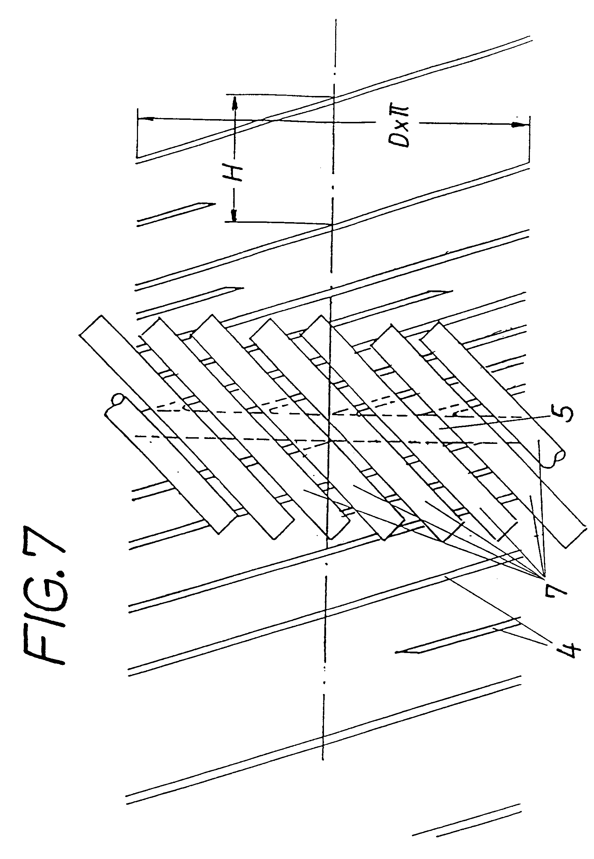

In Figur 6 ist die Abwicklung der Schneckengänge in ihrer Zuordnung zu den schräg eingesetzten Stiften dargestellt. Dabei ist eine eingängige Schnecke mit einer Steigung H und einem Schneckendurchmesser D gezeichnet. Die Schnecke könnte auch partiell oder total mehrgängig und/oder mit anderer Steigung verwendet werden (Fig.7). Der Stiftsteigungswinkel β ist zu 45° gezeichnet. Die Zahl der vorgesehenen Stifte auf dem Umfang ist davon abhängig.

Werden z. B. nur sechs Stifte pro Wirkungszone gewählt, könnte der Winkel β größer sein.

In Fig. 3 sind die schräg zur Schneckenachse vorgesehenen Stifte in die Schnittebene geklappt gezeichnet. In den Fig. 4 und 5 erscheinen die Schnitte durch die Stifte, die an sich einen kreisrunden Querschnitt an ihren Oberflächen aufweisen, wegen ihrer windschiefen Anordnung oval.

## Patentansprüche

1. Schneckenextruder,
in dessen mindestens eine Schnecke (3) aufnehmendem Zylinder (1) Bohrungen für die Aufnahme von in den Förderbereich hineinragenden, in Radialebenen angeordneten Stiften (7) vorgesehen sind, deren Achsen zur Zylinderwand tangential oder in der Nähe der Tangenten parallel zu diesen angeordnet sind,
dadurch gekennzeichnet,
daß die Stifte (7) in Bereichen angeordnet sind, in denen die Schnecke (3) mit einer ringförmigen Kernwulst (5) und der Zylinder (1) mit einer ringförmigen Ausnehmung (6) der Innenwand versehen ist,
daß die Stifte (7) außerhalb eines (gedachten), die Rücken der Stege (4) der Schnecke (3) umhüllenden Zylinders angeordnet sind,
daß die Stifte (7) den Radialebenenbereich, in dem sich die Kernwulst (5) und die ringförmige Ausnehmung (6) befinden, schräg durchsetzen.

2. Schneckenextruder nach Anspruch 1,
dadurch gekennzeichent,
daß die ringförmige Ausnehmung (6) in der Zylinderinnenwand im Querschnitt trapezförmig ist.

3. Schneckenextruder nach Anspruch 1,
dadurch gekennzeichnet,
daß der Winkel der Stiftachsen mit dem Radialebenenbereich 30° bis 75° beträgt.

4. Schneckenextruder nach Anspruch 1,
dadurch gekennzeichnet,
daß die Stifte (7) eine Ausnehmung (10) aufweisen, deren Radius größer als der Radius der Schnecke (3) ist.

5. Schneckenextruder nach Anspruch 4,
dadurch gekennzeichnet,
daß die Stifte (7) um ihre Achse um einen bis zu 90° betragenden Winkel verstellbar und feststellbar sind.

6. Schneckenextruder nach Anspruch 1,
dadurch gekennzeichnet,
daß der Kernwulst (5) auf der Schnecke (3) im Querschnitt trapezförmig ist.

7. Schneckenextruder nach Anspruch 1,
dadurch gekennzeichnet,
daß die Stifte (7) einen runden Querschnitt aufweisen.

8. Schneckenextruder nach Anspruch 1,
dadurch gekennzeichnet,
daß die Stifte (7) hohl und von einem Temperiermittel durchflossen sind.

9. Schneckenextruder nach Anspruch 1,
dadurch gekennzeichnet,
daß der Abstand der Stifte (7) voneinander im Radialebenenbereich in etwa dem Stiftdurchmesser entspricht oder enger ist.

10. Schneckenextruder nach Anspruch 1,
dadurch gekennzeichnet,
daß der Kernwulst (5) der Schnecke mit einer Verzahnung versehen ist.

11. Schneckenextruder nach Anspruch 1,
dadurch gekennzeichnet,
daß die Tiefe der Verzahnung in Förderrichtung abnimmt.

12. Schneckenextruder nach Anspruch 1,
dadurch gekennzeichnet,
daß Stifte (7) im Zylinder (1) in mehreren in Fließrichtung gesehen hintereinander angeordneten Radialebenenhereichen angeordnet sind.

## Claims

1. Worm extruder, wherein the cylinder (1) receiving at least one worm (3) is provided with holes to receive pins (7) disposed in radial planes projecting into the conveying zone, the axes of said pins being arranged tangentially to the cylinder wall or in the vicinity of the tangents parallel thereto, characterised in that the pins (7) are arranged in regions in which the worn (3) is provided with a ring-shaped core ridge (5) and the cylinder (1) is provided with a ring-shaped recess (6) in the inside wall; that the pins (7) are arranged outside an (imaginary) cylinder enclosing the backs of the webs (4) of the worn (3); that the pins (7) pass obliquely through the radial plane region in which the core ridge (5) and the ring-shaped recess (6) are located.

2. Worm extruder according to Claim 1, characterised in that the ring-shaped recess (6) in the inside wall of the cylinder is trapezoidal in cross-section.

3. Worm extruder according to Claim 1, characterised in that the angle of the pin axes with the radial plane region amounts to 30° to 75°.

4. Worm extruder according to Claim 1, characterised in that the pins (7) have a recess (10) with a radius larger than the radius of the worn (3).

5. Worm extruder according to Claim 4, characterised in that the pins (7) are adjustable and may be fixed about their axis by an angle amounting up to 90°.

6. Worm extruder according to Claim 1, characterised in that the core ridge (5) on the worn (3) is trapezoidal in cross-section.

7. Worm extruder according to Claim 1, characterised in that the pins (7) have a round cross-section.

8. Worn extruder according to Claim 1, characterised in that the pins (7) are hollow and have tempering medium flowing through them.

9. Worm extruder according to Claim 1, characterised in that the spacing of the pins (7) from one another in the radial plane region corresponds approximately to the pin diameter or less.

10. Worm extruder according to Claim 1, characterised in that the core ridge (5) of the worn is provided with a toothed arrangement.

11. Worm extruder according to Claim 1, characterised in that the depth of the toothed arrangement decreases in the direction of conveying.

12. Worm extruder according to Claim 1, characterised in that the pins (7) are arranged in the cylinder (1) in several radial plane regions arranged one behind the other viewed in the direction of flow.

## Revendications

1. Extrudeuse à vis dans le cylindre (1) de laquelle, recevant au moins une vis sans fin (3), sont prévus des perçages destinés à recevoir des broches (7) faisant saillie dans la zone de convoyage, disposées dans des plans radiaux, dont les axes sont disposés relativement à la paroi du cylindre tangentiellement ou au voisinage des tangentes parallèlement à celles-ci, caractérisée en ce que les broches (7) sont disposées dans des zones où la vis (3) est pourvue d'un bourrelet d'âme annulaire (5) et le cylindre (1) d'un évidement annulaire (6) de la paroi intérieure, en ce que les broches (7) sont disposées à l'extérieur d'un cylindre (imaginaire) enveloppant les dos des crêtes (4) de la vis (3), en ce que les broches (7) traversent en biais la zone des plans radiaux dans laquelle se situent le bourrelet d'âme (5) et l'évidement annulaire (6).

2. Extrudeuse à vis selon la revendication 1, caractérisée en ce que l'évidement annulaire (6) dans la paroi intérieure du cylindre a une forme de trapèze en section transversale.

3. Extrudeuse à vis selon la revendication 1, caractérisée en ce que l'angle des axes de broches avec la zone des plans radiaux est de 30° à 75°.

4. Extrudeuse à vis selon la revendication 1, caractérisée en ce que les broches (7) présentent un évidement (10) dont le rayon est plus grand que le rayon de la vis (3).

5. Extrudeuse à vis selon la revendication 4, caractérisée en ce que les broches (7) peuvent être réglées et fixées autour de leur axe suivant un angle allant jusqu'à 90°.

6. Extrudeuse à vis selon la revendication 1, caractérisée en ce que le bourrelet d'âme (5) sur la vis (3) a une forme de trapèze en section transversale.

7. Extrudeuse à vis selon la revendication 1, caractérisée en ce que les broches (7) ont une section transversale circulaire.

8. Extrudeuse à vis selon la revendication 1, caractérisée en ce que les broches (7) sont creuses et qu'un moyen d'équilibrage de la température s'écoule à travers celles-ci.

9. Extrudeuse à vis selon la revendication 1, caractérisée en ce que l'écart entre les broches (7) correspond dans la zone des plans radiaux à peu près au diamètre des broches ou est plus étroit que celui-ci.

10. Extrudeuse à vis selon la revendication 1, caractérisée en ce que le bourrelet d'âme (5) de la vis présente une denture.

11. Extrudeuse à vis selon la revendication 1, caractérisée en ce que la profondeur de la denture diminue dans la direction de convoyage.

12. Extrudeuse à vis selon la revendication 1, caractérisée en ce que les broches (7) dans le cylindre (1) sont disposées dans plusieurs zones des plans radiaux disposées dans la direction d'écoulement les unes derrière les autres.
